Europäisches Patentamt

European Patent Office

Office européen des brevets

(11) Veröffentlichungsnummer: **0 334 080 B1**

(12) **EUROPÄISCHE PATENTSCHRIFT**

(45) Veröffentlichungstag der Patentschrift :
30.10.91 Patentblatt 91/44

(51) Int. Cl.⁵ : **E04B 2/96**

(21) Anmeldenummer : **89103797.0**

(22) Anmeldetag : **03.03.89**

(54) T-Verbindung zwischen zwei Profilen, vorzugsweise einem Sprossen- und einem Pfostenprofil einer Fassade.

(30) Priorität : **24.03.88 DE 3809951**

(43) Veröffentlichungstag der Anmeldung :
**27.09.89 Patentblatt 89/39**

(45) Bekanntmachung des Hinweises auf die
Patenterteilung :
**30.10.91 Patentblatt 91/44**

(84) Benannte Vertragsstaaten :
**AT BE CH DE ES FR GB GR IT LI LU NL SE**

(56) Entgegenhaltungen :
**DE-A- 3 228 056**
**DE-A- 3 419 294**
**DE-B- 2 550 200**

(73) Patentinhaber : **SCHÜCO International GmbH
& Co.
Karolinenstrasse 1-15
W-4800 Bielefeld 1 (DE)**

(72) Erfinder : **Janssen, Pieter
Uranusstrasse 25
W-4800 Bielefeld 15 (DE)**
Erfinder : **Bock, Günter
Bultkamp 11
W-4800 Bielefeld 1 (DE)**
Erfinder : **Scheuer, Helmuth
Am Ringscheidt 13
W-4904 Enger (DE)**

(74) Vertreter : **Stracke, Alexander, Dipl.-Ing. et al
Jöllenbecker Strasse 164
W-4800 Bielefeld 1 (DE)**

EP 0 334 080 B1

## Beschreibung

Die Erfindung bezieht sich auf eine T-Verbindung zwischen zwei Profilen, vorzugsweise einem Sprossen- und einem Pfostenprofil einer Fassade, von denen das Sprossenprofil und das Pfostenprofil eine Innenkammer aufweisen und in der Innenkammer des Sprossenprofils an dem der Verbindungsfuge zugewandten Stirnende ein im Längsschnitt U-förmiger Verbinder festgelegt ist, der aus einer mit mindestens einer Führungsbohrung für einen federbelasteten, mit einer rechteckigen Anschlagplatte ausgerüsteten Bundbolzen versehenen Stirnplatte und aus von zwei gegenüberliegenden Stirnplattenrändern ausgehenden plattenförmigen Schenkeln besteht, die benachbart den zugeordneten Innenflächen des Sprossenprofils sich erstrecken, der Bundbolzen verdrehsicher in dem Verbinderkörper geführt und durch die Verbindungsfuge und eine Bohrung in einer Wand des Pfostenprofils in die Innenkammer des Pfostenprofils ragt und gegenüber dem Pfostenprofil festgelegt ist.

Es ist eine derartige T-Verbindung bekannt (DE-OS 3419294.8), bei der die plattenförmigen Schenkel des im Längsschnitt U-förmigen Verbinderkörpers vor dem Einsetzen in das Sprossenprofil mit einem Kleber versehen werden und der Verbinderkörper nach dem Einsetzen in ein Stirnende des Sprossenprofils durch in das Sprossenprofil eingedrehte Schrauben zusätzlich zu der Verklebung zwischen den Schenkeln und den Innenseiten des Sprossenprofils befestigt wird.

Der bekannte Verbinderkörper ist mit zwei Bundbolzen ausgerüstet, die federbelastet sind, eine rechteckige Anschlagplatte aufweisen und im Verbinderkörper verdrehsicher geführt werden. Diese Bundbolzen dringen, bei der Verbindung des Sprossenprofils mit einem Pfostenprofil durch eine Bohrung in die Innenkammer des Pfostenprofils ein und weisen eine Querbohrung auf, durch die ein Stift von außen durch eine Montagebohrung im Pfostenprofil getrieben wird, um die Bundbolzen am Pfostenprofil zu verankern.

Der Erfindung liegt die Aufgabe zugrunde, eine T-Verbindung der eingangs genannten Art so zu gestalten, daß der T-Verbinder sowohl im Sprossenprofil als auch im Pfostenprofil in einfacher Weise festgelegt werden kann, ohne daß der Verbinderkörper mit dem Sprossenprofil verschraubt zu werden braucht und der Bundbolzen mit einem von außen in das Pfostenprofil eingeführten Stift o.dgl. in der Innenkammer des Pfostenprofils verankert werden muß.

Diese Aufgabe wird erfindungsgemäß mit den kennzeichnenden Merkmalen des Anspruches 1 gelöst.

Durch das Anziehen der Spannschraube werden nach dem Einsetzen des Verbinderkörpers in das Stirnende eines Sprossenprofils die mit einem Klebstoff belegten Schenkel an die zugeordneten Innenflächen des Sprossenprofils gepreßt, so daß beim Abbinden des Klebers eine einwandfreie Verbindung zwischen den plattenförmigen Schenkeln des Verbinderkörpers und dem Sprossenprofil entsteht.

Da das vordere Ende des oder der Bundbolzen mit einer Rastausnehmung ausgerüstet ist, kann der durch eine Bohrung in die Innenkammer des Pfostenprofils eingeführte Bundbolzen in seiner Rastausnehmung einen Teil der Bohrungswand aufnehmen, so daß sich eine formschlüssige Verbindung zwischen dem Bundbolzen und dem Pfostenprofil ergibt.

Als weiteres Verbindungsmittel zwischen dem Sprossen- und dem Pfostenprofil kann eine Schraube oder ein federbelasteter Raststift verwendet werden, der in eine Rastbohrung des Pfostenprofils einfedert.

Bei einer vorteilhaften Ausführungsform der Erfindung ist der Bundbolzen mit zwei in Längsrichtung hintereinander angeordneten und in einem Winkelabstand von 180° zueinander versetzten Rastausnehmungen ausgestattet.

Die Anschlagplatte des Bundbolzens wird zwischen Wangen geführt, wobei die die Stirnplatte überragende freie Länge des Bolzens bei an der Anschlagfläche des Verbinders anliegender Anschlagplatte kleiner ist als die maximale Führungsstrecke der Wangen.

Durch ein Eindrücken des Bundbolzens entgegen der Wirkung der Feder in den Verbinderkörper bis sich die Anschlagplatte außerhalb der Wangen befindet, kann der Bundbolzen um 180° gedreht und freigelassen werden, so daß die Anschlagplatte unter der Wirkung der Feder wieder in den Bereich der Führungswangen bis zum vorderen Anschlag bewegt wird. Es kann nun die zweite Rastausnehmung zur formschlüssigen Verbindung des Bolzens mit dem Pfostenprofil verwendet werden.

Weitere Merkmale der Erfindung ergeben sich aus den Unteransprüchen und der folgenden Beschreibung vorteilhafter, beispielsweiser Ausführungsformen der T-Verbindung.

Es zeigen :

Fig. 1    ein mit einem Verbinder ausgerüstetes Sprossenprofil und ein Pfostenprofil im Schnitt mit zwischengeschalteter Dichtmanschette vor dem Zusammenfügen dieser Teile,

Fig. 2    die in der Fig. 1 aufgezeigten Teile nach der Verbindung im Schnitt,

Fig. 3    eine Verbindung zwischen einem Sprossen- und einem Pfostenprofil ohne eine Dichtmanschette im Verbindungsbereich,

Fig. 4    einen mit einem Bundbolzen ausgerüsteten Verbinder im Schnitt,

2

Fig. 5    einen Schnitt nach der Linie V-V in Fig. 4,

Fig. 6    eine Ansicht in Richtung des Pfeiles VI in Fig. 4,

Fig. 7    ein weiteres Ausführungsbeispiel einer Stoßverbindung zwischen einem Sprossenprofil und einem Pfostenprofil im Schnitt und

Fig. 8    eine Ansicht in Richtung des Pfeiles VIII mit schematischer Darstellung des Verb inders.

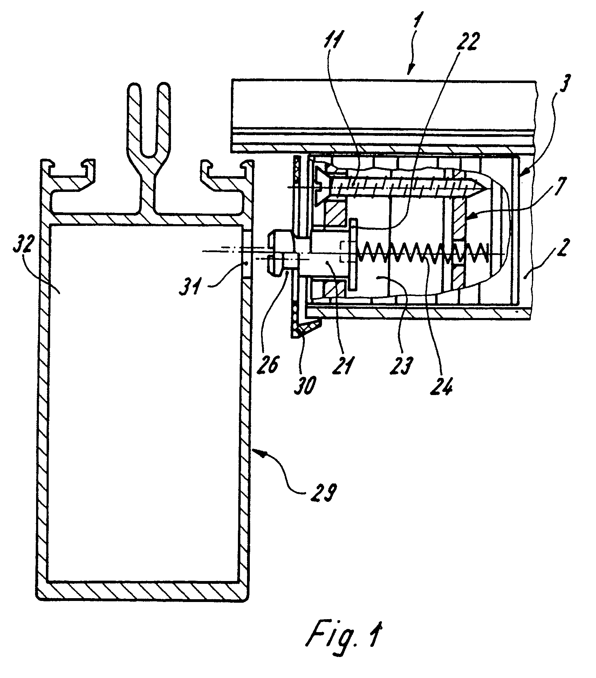

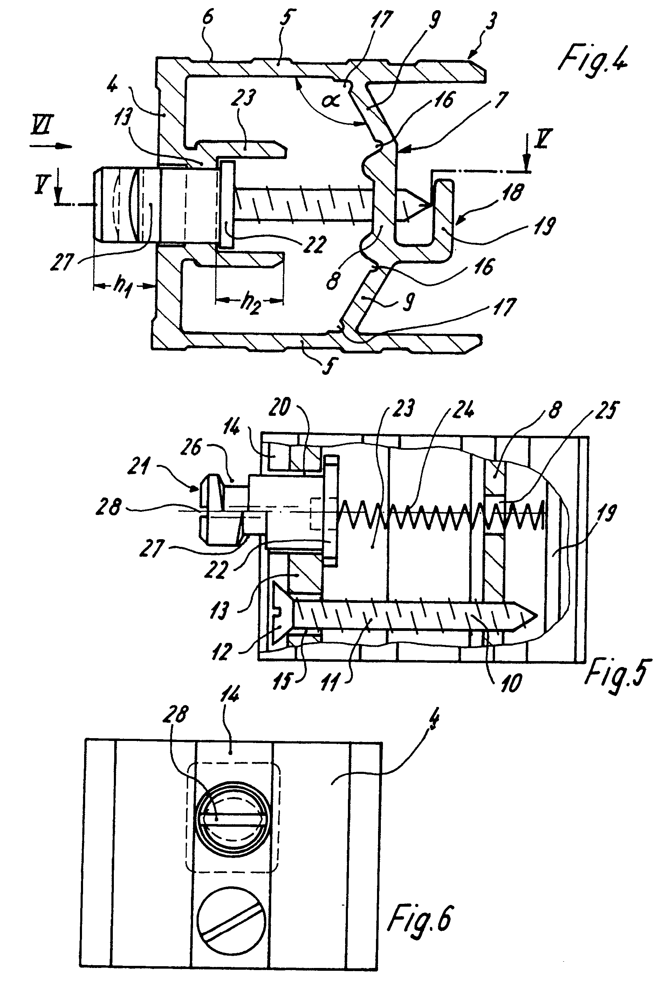

Bei dem Ausführungsbeispiel nach der Fig. 1 ist am Stirnende eines Sprossenprofils 1 in seiner Innenkammer 2 ein Verbinder 3 festgelegt, dessen konstruktiver Aufbau sich aus den Fig. 4 bis 6 ergibt.

Der Verbinderkörper ist, wie aus der Fig. 4 folgt, im Längsschnitt U-förmig gestaltet und weist eine Stirnplatte 4 auf, von der an zwei Seitenrändern plattenförmige Schenkel 5 ausgehen. Diese plattenförmigen Schenkel 5 weisen nach außen geöffnete Aussparungen 6 auf, die zur Aufnahme eines Klebstoffes verwendet werden, mit dem die Schenkel des Verbinderkörpers vor dem Einsetzen in die Innenkammer des Sprossenprofils 1 belegt werden.

Zwischen den plattenförmigen Schenkeln 5 ist ein kniehebelartig ausgebildeter Brückensteg 7 vorgesehen, der mit den Schenkeln einstückig ist und aus einem mittigen Stegteil 8 und Stegteilen 9 besteht, die vom mittigen Stegteil 8 ausgehen und zu den Schenkeln 5 unter einem stumpfen Winkel $\alpha$ verlaufen.

Der mittige Stegteil 8 ist mit einer Gewindebohrung 10 für eine Spannschraube 11 ausgerüstet, die sich mit ihrem Kopf 12 an der Stirnplatte, und zwar an dem Boden 13 einer in der Stirnplatte vorgesehenen Nut 14 abstützt. Diese Nut 14 erstreckt sich über die gesamte Höhe der Stirnplatte 4. Der Boden 13 ist mit einer Durchsteckbohrung 15 für den Gewindeschaft der Spannschraube 11 ausgerüstet. Beim Anziehen der Spannschraube wird der Brückensteg 7 deformiert und spreizt die plattenförmigen Schenkel 5 nach außen.

Um diese Deformation des Brückenstegs beim Anziehen der Schraube zu unterstützen und zu vereinfachen, sind am Übergang vom mittleren Stegteil 8 zu den Stegteilen 9 und am Übergang von den Stegteilen 9 zu den Schenkeln 5 Auskehlungen 16, 17 vorgesehen.

An der Rückseite des mittleren Stegteils ist eine Winkelleiste 18 angeordnet, die einen parallel zum mittleren Stegteil verlaufenden Leistenteil 19 aufweist, durch den Hub der Spannschraube und damit die Spreizung der Schenkel 5 begrenzt wird.

Der Boden 13 ist ferner mit einer Durchsteckbohrung 20 für einen Bundbolzen 21 versehen, bei dem der Bund durch eine im Querschnitt rechteckige Anschlagplatte 22 gebildet wird. Diese Anschlagplatte wird zwischen Wangen 23 geführt, die vom Boden 13 der Nut ausgehen und sich in Richtung auf den Brückensteg 7 erstrecken. Die Wangen 23 bilden eine Führungsbahn mit einer Länge $h_2$, während die Länge des Bundbolzenteils, der bei an der Anschlagfläche des Verbinders anliegender Anschlagplatte 22 über die Stirnplatte hinausragt, $h_1$ ist. $h_1$ muß kleiner sein als $h_2$.

Dem Bundbolzen 21 ist eine Feder 24 zugeordnet, die sich durch eine Bohrung 25 des mittleren Stegteils 8 erstreckt und sich mit ihrem hinteren Ende an dem Leistenteil 19 abstützt.

Das vordere Ende des Bundbolzens 21 ist mit zwei in Längsrichtung hintereinander angeordneten Rastausnehmungen 26, 27 ausgerüstet. Diese Rastausnehmungen sind in einem Winkelabstand von 180° zueinander versetzt angeordnet.

Die vordere Stirnfläche des Bundbolzens ist mit einem Schlitz 28 zum Einführen eines Schraubendrehers ausgestattet. Mit diesem Schraubendreher kann der Bundbolzen entgegen der Wirkung der Feder 24 in das Innere des Verbinderkörpers eingedrückt werden, bis sich die Anschlagplatte 22 außerhalb der Wangen 23 befindet. Der Bundbolzen kann dann um 180° gedreht werden, um die Rastausnehmung 26 in die untere Lage zu bringen, um diese Rastausnehmung dann bei der Verbindung des Sprossenprofils mit dem Pfostenprofil einzusetzen.

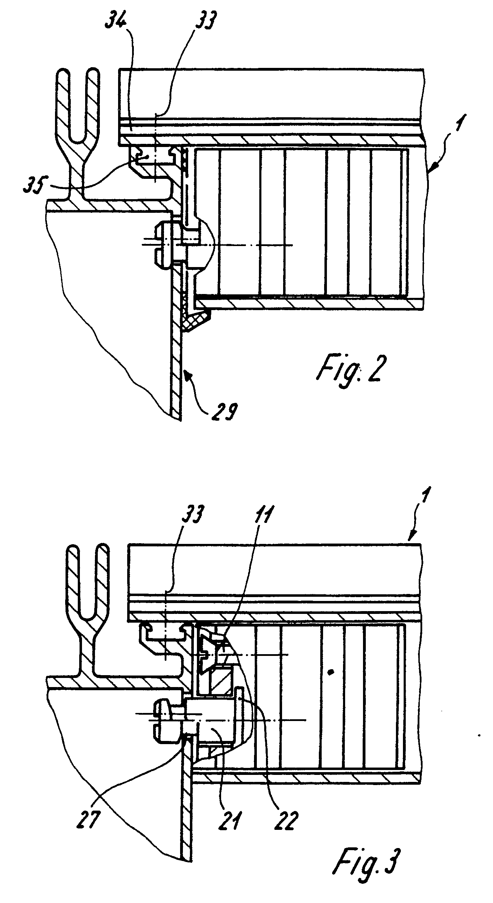

Die Rastausnehmung 26 wird für die formschlüssige Verbindung des Bundbolzens 21 mit einem Pfostenprofil 29 beim Ausführungsbeispiel nach den Fig. 1 und 2 verwendet, bei dem Verbindungsbereich eine Dichtmanschette 30 angeordnet ist.

Der vordere Teil des Bundbolzens wird zur Verbindung der beiden Profile durch eine Bohrung 31 in die Innenkammer 32 des Pfostenprofils eingeführt und dann in die Lage gebracht, die in der Fig. 2 aufgezeigt ist.

Sofern eine Verbindung zwischen dem Sprossenprofil 1 und dem Pfostenprofil 29 ohne die Dichtmanschette 30 vorgenommen werden soll, wird die hintere Rastausnehmung 27 des Bundbolzens 21 verwendet. Eine derartige Verbindung ist in der Fig. 3 aufgezeigt.

Zur endgültigen Verbindung zwischen dem Sprossenprofil 2 und dem Pfostenprofil 29 wird eine Verschraubung 33 zwischen den beiden Profilen im Bereich der Verankerungsnuten 34 und 35 für Dichtungsprofile vorgenommen.

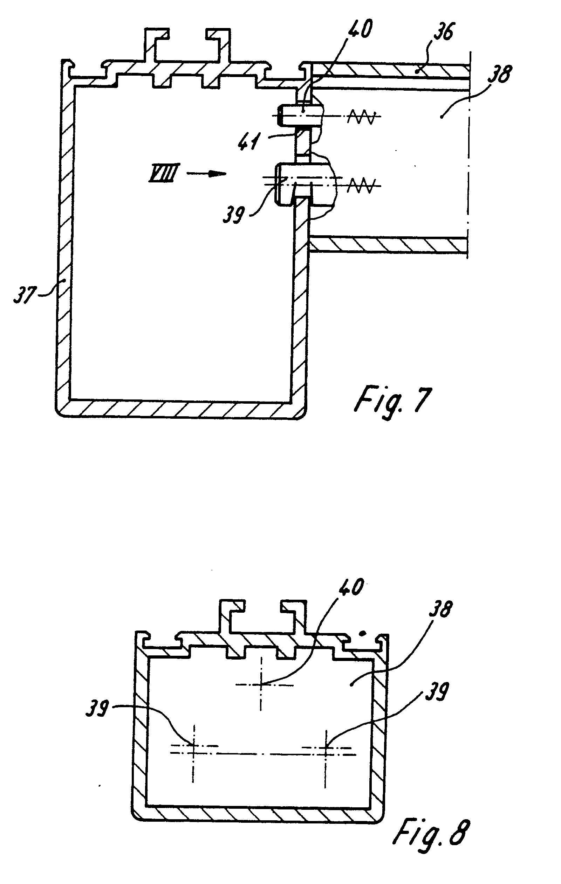

Die Fig. 7 und 8 zeigen ein weiteres Ausführungsbeispiel einer Stoßverbindung zwischen dem Sprossenprofil 36 und dem Pfostenprofil 37. Bei dieser Verbindung ist der Verbinder 38 mit zwei in einer Ebene nebeneinander liegenden Bundbolzen 39 ausgerüstet und weist ferner einen federbelasteten Raststift 40 auf, der in

3

eine Bohrung 41 des Pfostenprofils einfedert.

Bezugszeichen

| | |
|---|---|
| 1 | Sprossenprofil |
| 2 | Innenkammer |
| 3 | Verbinder |
| 4 | Stirnplatte |
| 5 | Schenkel |
| 6 | Aussparung |
| 7 | Brückensteg |
| 8 | Stegteil |
| 9 | Stegteil |
| 10 | Gewindebohrung |
| 11 | Spannschraube |
| 12 | Kopf |
| 13 | Boden |
| 14 | Nut |
| 15 | Durchsteckbohrung |
| 16 | Auskehlung |
| 17 | Auskehlung |
| 18 | Winkelleiste |
| 19 | Leistenteil |
| 20 | Durchsteckbohrung |
| 21 | Bundbolzen |
| 22 | Anschlagplatte |
| 23 | Wange |
| 24 | Feder |
| 25 | Bohrung |
| 26 | Rastausnehmung |
| 27 | Rastausnehmung |
| 28 | Schlitz |
| 29 | Pfostenprofil |
| 30 | Dichtmanschette |
| 31 | Bohrung |
| 32 | Innenkammer |
| 33 | Verschraubung |
| 34 | Verankerungsnut |
| 35 | Verankerungsnut |
| 36 | Sprosspenprofil |
| 37 | Pfostenprofil |
| 38 | Verbinder |
| 39 | Bundbolzen |
| 40 | Raststift |

**Patentansprüche**

1. T-Verbindung zwischen zwei Profilen (1, 29), vorzugsweise einem Sprossen- und einem Pfostenprofil einer Fassade, von denen das Sprossenprofil (1) und das Pfostenprofil (29) eine Innenkammer (2, 32) aufweisen und in der Innenkammer (2) des Sprossenprofils (1) an dem der Verbindungsfuge zugewandten Stirnende ein im Längsschnitt U-förmiger Verbinder (3) festgelegt ist, der aus einer mit mindestens einer Führungsbohrung für einen federbelasteten, mit einer rechteckigen Anschlagplatte (22) ausgerüsteten Bundbolzen (21, 39) versehenen Stirnplatte (4) und aus von zwei gegenüberliegenden Stirnplattenrändern ausgehenden plattenförmigen Schenkeln (5) besteht, die benachbart den zugeordneten Innenflächen des Sprossenprofils (1) sich erstrecken, der Bundbolzen (21) verdrehsicher in dem Verbinderkörper (3) geführt und durch die Verbindungsfuge und eine Bohrung (31) in einer Wand des Pfostenprofils (29) in die Innenkammer (32) des Pfostenprofils (29) ragt und gegenüber dem Pfostenprofil (29) festgelegt ist, **dadurch gekennzeichnet,** daß der Bundbolzen

4

(21, 39) im Bereich seiner die Stirnplatte (4) nach außen überragenden Länge mindestens eine Rastausnehmung (26, 27) aufweist und zwischen den plattenförmigen Schenkeln (5) ein kniehebelartig ausgebildeter Brückensteg (7) vorgesehen ist, der mit einer Gewindebohrung (10) für eine sich mit ihrem Kopf (12) an der Stirnwand abstützende Spannschraube (11) versehen ist und der Brückensteg (7) sich aus einem mittleren Stegteil (8) und mit den Schenkeln (5) verbundenen Stegteilen (9) zusammensetzt, wobei die Stegteile (9) unter einem an der zur Stirnplatte (4) weisenden Seite gemessenen stupfen Winkel ($\alpha$) zu den Schenkeln (5) verlaufen, und wobei die Gewindebohrung (10) für die Spannschraube (11) im mittleren Stegteil (8) angeordnet .ist.

2. T-Verbindung nach Anspruch 1, dadurch gekennzeichnet, daß der Bundbolzen (21) mit zwei in Längsrichtung hintereinander angeordneten und in einem Winkelabstand von 180° zueinander versetzten Rastausnehmungen (26, 27) ausgestattet ist.

3. T-Verbindung nach Anspruch 2, dadurch gekennzeichnet, daß die Anschlagplatte (22) des Bundbolzens (21) zwischen Wangen (23) geführt ist und die die Stirnplatte (4) überragende, freie Länge ($h_1$) des Bundbolzens bei an der Anschlagfläche des Verbinders anliegender Anschlagplatte (22) kleiner ist als die maximale Führungsstrecke ($h_2$) der Wangen (23).

4. T-Verbindung nach Anspruch 1, dadurch gekennzeichnet, daß an der Rückseite des Brückenstegs (7) eine Winkelleiste (18) vorgesehen ist, dessen parallel zum mittleren Stegteil (8) verlaufender Leistenteil (19) den Hub der Spannschraube (11) begrenzt und eine Abstützfläche für ein Ende der dem Bundbolzen (21) zugeordneten Feder (24) bildet.

5. T-Verbindung nach einem der vorhergehenden Ansprüche, dadurch gekennzeichnet, daß die Stirnplatte (4) eine nach außen geöffnete Nut (14) aufweist, in deren Boden (13) die Durchsteckbohrung für den Bundbolzen (21) und eine Durchsteckbohrung für den Gewindeschaft der Spannschraube (11) vorgesehen sind, wobei ein Teil der Rückseite des Nutbodens die Anschlagfläche für die Anschlagplatte (22) bildet.

6. T-Verbindung nach Anspruch 5, dadurch gekennzeichnet, daß die Wangen (23) zur Führung der Anschlagplatte (22) von der Rückseite des Nutbodens sind in Richtung des Brückensteges (7) erstrecken.

7. T-Verbindung nach Anspruch 1, dadurch gekennzeichnet, daß der Verbinder (38) mit zwei nebeneinander liegenden Bundbolzen (39) ausgerüstet ist und einen federbelasteten Raststift (40) aufweist, der in eine Bohrung (41) der der Verbindungsfuge benachbarten Wand des Pfostenprofils (37) eingreift.

## Claims

1. A T-connection between two profile members (1, 29), preferably a transom member and a mullion member of a facade, of which the transom member (1) and the mullion member (29) have an internal chamber (2, 32) and fixed in the internal chamber (2) of the transom member (1) at the end which is towards the junction is a connector (3) of U-shaped longitudinal section, the connector comprising an end plate (4) which is provided with at least one guide bore for a spring-loaded flanged pin (21, 39) provided with a rectangular abutment plate (22), and the connect or further comprising plate-like leg (5) which extend from two oppositely disposed edges of the end plate (4) and which extend adjacent to the associated internal surfaces of the transom member (1), the flanged pin (21) is non-rotatably guided in the connector body (3) and projects through the junction and a bore (31) in a wall of the mullion member (29) into the internal chamber (32) of the mullion member (29) and is fixed with respect to the mullion member (29), characterised in that the flanged pin (21, 39) has at least one retaining recess (26, 27) in the region of its length which projects outwardly beyond the end plate (4) and provided between the plate-like legs (5) is a bridge limb (7) which is of an elbow lever-like configuration and which is provided with a screwthreaded bore (10) for a clamping screw (11) which bears with its head (12) against the end wall and the bridge limb (7) consist of a central limb portion (8) and limb portions (9) connected to the legs (5), wherein the limb portions (9) extend relative to the leg (5) at an obtuse angle $\alpha$ as measured at the side facing towards the end plate (4) and wherein the screwthreaded bore (10) for the clamping screw (11) is disposed in the central limb portion (8).

2. A T-connection according to claim 1 characterised in that the flanged pin (21) is provided with two retaining recesses (26, 27) which are arranged one behind the other in the longitudinal direction and which are displaced relative to each other at an angular spacing of 180°.

3. A T-connection according to claim 2 characterised in that the abutment plate (22) of the flanged pin (21) is guided between side portions (23) and the free length ($h_1$) of the flanged pin, which projects beyond the end plate (4), is less than the maximum guide distance ($h_2$) of the side portions, when the abutment plate (22) bears against the abtument surface of the connector.

4. A T-connection according to claim 1 characterised in that provided at the rear side of the bridge limb (7) is an angular bar (18) having a bar portion (19) which extends parallel to the central limb portion (8) and limits the movement of the clamping screw (11) and forms a support surface for one end of the spring (24) which is associated with the flanged pin (21).

5. A T-connection according to one of the preceding claims characterised in that the end plate (4) has an outwardly open groove (14), in the bottom (13) of which are provided the through bore for the flanged pin (21) and a through bore for the screwthreaded shank of the clamping screw (11), a part of the rear side of the bottom of the groove forming the abutment surface for the abutment plate (21).

6. A T-connection according to claim 5 characterised in that the side portions (23) for guiding the abutment plate (22) extend from the rear side of the bottom of the groove in the direction of the bridge limb (7).

7. A T-connection according to claim 1 characterised in that the connector (38) is provided with two juxtaposed flanged pins (39) and has a spring-loaded retaining pin (40) which engages into a bore (41) in the wall adjacent to the junction of the mullion member (37).

## Revendications

1. Raccord en T entre deux profilés (1, 29), de préférence un profilé de traverse et un profilé de montant d'une façade dans lequel le profilé de traverse (1) et le profilé de montant (29) présentent une chambre intérieure (2, 32) et dans la chambre intérieure (2) du profilé de traverse (1), il est fixé sur l'extrémité frontale tournée vers le joint de liaison, une pièce de liaison (3) de section longitudinale en U, qui est constituée d'une plaque frontale (4), pourvue d'au moins un trou de guidage pour un goujon à épaulement (21, 39) muni d'une plaque de butée (22) rectangulaire et constituée d'ailes (5) en forme de plaques, partant de deux bords opposés de la plaque frontale, qui s'étendent à proximité des faces intérieures correspondantes du profilé de traverse (1), le goujon à épaulement (21) est guidé de manière à ne pas pouvoir tourner dans la pièce de liaison (3) et traverse le joint de liaison et un trou (31) pratiqué dans une paroi du profil de montant (29) pour pénétrer dans la chambre intérieure (32) du profilé de montant (29) et est fixé par rapport au profilé de montant (29), caractérisé en ce que le goujon à épaulement (21, 39) comporte, dans la région de sa longueur dépassant à l'extérieur de la plaque frontale (4), au moins un évidement d'arrêt (26, 27) et en ce qu'il est prévu, entre les ailes (5) en forme de plaques, une cloison en pont (7) en forme de levier coudé qui présente un trou taraudé (10) pour une vis de serrage (11) prenant appui, par sa tête (12), contre la paroi frontale et en ce que la cloison en pont (7) est constituée d'une partie de cloison centrale (8) et de parties de cloison (9) reliant les ailes (5), les parties de cloison (9) formant un angle obtus $\alpha$ avec les ailes (5), mesuré sur les côtés tournés vers la plaque frontale (4) et le trou taraudé (10) pour la vis de serrage (11), étant pratiqué dans la partie de cloison centrale (8).

2. Raccord en T selon la revendication 1, caractérisé en ce que le goujon à épaulement (21) est muni de deux évidements d'arrêt (26, 27) décalés l'un par rapport à l'autre d'un angle de 180° et placés l'un derrière l'autre dans la direction longitudinale.

3. Raccord en T selon la revendication 2, caractérisé en ce que la plaque de butée (22) du goujon à épaulement (21) est guidée entre des parois (23) et la longueur libre ($h_1$) du goujon à épaulement, dépassant de la plaque frontale (4), est inférieure, avec la plaque de butée (22) s'appliquant contre la surface de butée de la pièce de liaison, au parcours de guidage maximal ($h_2$) des parois (23).

4. Raccord en T selon la revendication 1, caractérisé en ce qu'il est prévu sur la face arrière de la cloison en pont (7), une aile en équerre (18) dont la partie d'aile (19) parallèle à la partie de cloison centrale (8) limite la course de la vis de serrage (11) et forme une surface d'appui pour une extrémité du ressort (24) associé au goujon à épaulement (21).

5. Raccord en T selon l'une des revendications précédentes, caractérisé en ce que la plaque frontale (4) présente une rainure (14) ouverte vers l'extérieur dans le fond (13) de laquelle est prévu le trou de passage du goujon à épaulement (21) et un trou de passage pour la tige filetée de la vis de serrage (11), une partie de la face arrière du fond de la rainure formant la surface de butée pour la plaque de butée (22).

6. Raccord en T selon la revendication 5, caractérisé en ce que les parois (23) destinées au guidage de la plaque de butée (22) s'étendent à partir de la face arrière du fond de la rainure dans la direction de la cloison en pont (7).

7. Raccord en T selon la revendication 1, caractérisé en ce que la pièce de liaison (38) est munie de deux goujons à épaulement (39) juxtaposés et présente un doigt d'arrêt (40) soumis à l'action d'un ressort, qui s'engage dans un trou (41) pratiqué dans la paroi adjacente au joint de liaison du profilé de montant (37).

Fig. 1

Fig. 2

Fig. 3

Fig.4

Fig.5

Fig.6

Fig. 7

Fig. 8